# EUROPÄISCHE PATENTSCHRIFT

(11) **EP 0 843 845 B1**
(45) Veröffentlichungstag und Bekanntmachung des Hinweises auf die Patenterteilung: **01.12.1999**
(21) Anmeldenummer: 96925649.4
(22) Anmeldetag: 05.08.1996
(51) Int. Cl.: G05B 23/02

(54) **ANALYSESYSTEM FÜR EINE TECHNISCHE ANLAGE, INSBESONDERE FÜR EINE KRAFTWERKSANLAGE**
ANALYSIS SYSTEM FOR A TECHNICAL INSTALLATION, ESPECIALLY A POWER STATION
SYSTEME D'ANALYSE POUR INSTALLATION INDUSTRIELLE, NOTAMMENT POUR CENTRALE ELECTRIQUE

(30) Priorität: 09.08.1995 DE 19529303
(43) Veröffentlichungstag der Anmeldung: 27.05.1998
(73) Patentinhaber: SIEMENS AKTIENGESELLSCHAFT, 80333 München (DE)
(72) Erfinder: FÜHRING, Thorsten, D-81739 München (DE); MEDERER, Hans-Gerd, D-91052 Erlangen (DE); PANYR, Jiri, D-81373 München (DE); POLITIADIS-BEHRENS, Alexander, D-91315 Höchstadt (DE); PREISER, Ulrich, D-81541 München (DE)
(86) Internationale Anmeldenummer: DE9601464
(87) Internationale Veröffentlichungsnummer: WO9706475

(56) Entgegenhaltungen:
- EP-A- 0 643 345
- WO-A-95/18420
- DE-A- 4 338 237
- DE-A- 4 436 658
- PATENT ABSTRACTS OF JAPAN vol. 018, no. 018 (P-1673), 12.Januar 1994 & JP,A,05 256741 (TOSHIBA CORP), 5.Oktober 1993,

## Beschreibung

Die Erfindung bezieht sich auf ein Analysesystem für eine technische Anlage, insbesondere für eine Kraftwerksanlage, deren Anlagenprozeß in Funktionseinheiten zur Verarbeitung von Prozeßsignalen gegliedert ist.

In einer Leitwarte zur Steuerung einer Kraftwerksanlage fallen ständig große Mengen verschiedener Meßdaten an, die in ihrer Gesamtheit den Anlagen- oder Betriebszustand beschreiben. Das Bedienpersonal der Kraftwerksanlage steht vor der Aufgabe, die für den Betriebszustand jeweils relevanten Meßdaten oder Meßgrößen zu identifizieren und ihre Werte in Bezug auf den Zustand der Anlage zu verfolgen, zu analysieren und zu interpretieren. Dabei wird das Bedienpersonal üblicherweise von in der Leittechnik der Kraftwerksanlage vorgesehenen Informationsfiltern unterstützt, die archivierte oder ausschließlich für den aktuellen Anlagenzustand relevante Meßdaten oder Meßgrößen zu einer Anzeige bringen. Die überwiegende Menge der insgesamt erfaßten Meßdaten oder Meßgrößen wird üblicherweise lediglich elektronisch protokolliert.

Vorrangiges Ziel bei einer Analyse oder Interpretation dadurch entstandener Meßdatenprotokolle, insbesondere bei einer Systemdiagnose, ist die Ermittlung der Ursache für eine generierte Meldung. Beispielsweise ist aus der DE-A-44 36 658 eine Einrichtung zum Gewinnen von Korrelationen zwischen Ausgabesignalen von vorgegebenen Gruppen von Sensoren bekannt, bei der anhand eines Abweichungsgrades der Ausgabesignale jener Sensor identifiziert wird, der ein gestörtes Signal ausgibt. Insbesondere bei der Störungsanalyse muß vom Bedienpersonal geklärt werden, aufgrund welchen Fehlers ein Störungssignal auftrat. Dazu ist eine Signalrückverfolgung notwendig, bei der eine Kette von miteinander verknüpften Meldungsereignissen von der erhaltenen Störungsmeldung bis hin zu ihrer Ursache zurückverfolgt wird.

Um eine derartige Signalrückverfolgung zu vereinfachen, ist der Anlagenprozeß einer Kraftwerksanlage üblicherweise in Funktionseinheiten gegliedert. Die Unterteilung des Anlagenprozesses in eine Vielzahl von Funktionsgruppen oder Funktionseinheiten ist beispielsweise aus der DE-A-43 38 237 bekannt. Eine Überwachungseinrichtung, der für eine Vielzahl von untereinander abhängigen Anlagenprozessen die jeweiligen Betriebszustände überwacht und analysiert werden, ist aus der EP-A-0 643 345 bekannt. Jede dieser Funktionseinheiten umfaßt dabei, analog zu einem Unterprogramm eines Computerprogramms, eine kleine Anzahl von miteinander logisch verknüpften Verfahrensschritten. Jeder Funktionseinheit kann dabei ein Funktionsplan zugeordnet sein, der in der Art eines Flußdiagramms den Datenfluß in einer Funktionseinheit repräsentiert. Für eine Signalrückverfolgung, beispielsweise bei einem Störfall, findet das Bedienpersonal dann anhand dieser Funktionspläne diejenige Meldungskette auf, die zu einer Störungsmeldung geführt hat. Dies ist jedoch mit einem hohen Aufwand und zudem mit hohen Anforderungen an das Bedienpersonal hinsichtlich eines enormen Zeitdrucks verbunden, da häufig kurzfristig Entscheidungen zur Einleitung von Gegenmaßnahmen getroffen werden müssen.

Der Erfindung liegt daher die Aufgabe zugrunde, ein Analysesystem für eine Kraftwerksanlage anzugeben, mit dem eine zuverlässige und präzise Meldungsanalyse möglich ist.

Diese Aufgabe wird für ein Analysesystem für eine Kraftwerksanlage, deren Anlagenprozeß in Funktionseinheiten zur Verarbeitung von Prozeßsignalen gegliedert ist, erfindungsgemäß gelöst, indem für ein vorgebbares Prozeßsignal die mit diesem korrelierten Prozeßsignale als Informationselemente auf einer Anzeigeeinrichtung derart positioniert darstellbar sind, daß der Abstand zwischen jeweils zwei Informationselementen den Grad ihrer kontextuellen Ähnlichkeit repräsentiert.

Die Erfindung geht dabei von der Überlegung aus, daß auf der Grundlage des mathematischen Modells der formalen Begriffsanalyse große Mengen von Prozeßsignalen nach dem Prinzip "kontextuelle Nähe entspricht räumlicher Nähe" hinsichtlich ihrer Bedeutung für den Betriebszustand der Kraftwerksanlage gefiltert, verdichtet und/oder strukturiert werden können.

Die Prozeßsignale werden dabei im Sinne der formalen Begriffsanalyse als Gegenstände interpretiert, denen als Merkmale die Funktionseinheiten nach dem Kriterium zugeordnet werden, ob ein Prozeßsignal Bestandteil einer Funktionseinheit ist oder nicht. Ein Prozeßsignal wird dabei als Bestandteil einer Funktionseinheit angesehen, wenn es in dieser Funktionseinheit verarbeitet wird, indem z.B. logische Operatoren auf dieses Prozeßsignal angewendet werden. Dazu gehört insbesondere auch, daß das Prozeßsignal der Funktionseinheit als Eingangsgröße zugeführt wird, daß das Prozeßsignal durch die Funktionseinheit generiert wird und somit als Ausgangsgröße bereitgestellt wird, oder daß das Prozeßsignal unverändert durch die Funktionseinheit hindurchgeschleust wird. Um die dabei durchgeführte Analyse besonders flexibel gestalten zu können, sind die Funktionseinheiten in Funktionsplänen zusammengefaßt und in einem mit einem die Analyse durchführenden Rechnerbaustein verbundenen Speicherbaustein hinterlegt.

Nachdem in der Art einer Zuordnungstabelle für alle Prozeßsignale geprüft wurde, von welchen Funktionseinheiten sie Bestandteil sind und von welchen nicht, wird die kontextuelle oder auch inhaltliche Nähe von jeweils zwei Prozeßsignalen bestimmt. Dazu wird das Verhältnis der Anzahl der Funktionseinheiten, in denen die zwei Prozeßsignale gemeinsam Bestandteil sind, zur Anzahl derjenigen Funktionseinheiten, in denen mindestens eines der beiden Prozeßsignale Bestandteil ist, ermittelt. Mit anderen Worten: Jeweils zwei Prozeßsignale, die in allen Merkmalen übereinstimmen, weil sie Bestandteil der gleichen Funktionseinheiten sind, werden als einander inhaltlich besonders nahe klassifiziert, wogegen zwei Prozeßsignale, die in keinem Merkmal übereinstimmen, weil sie gemeinsam Bestandteil keiner Funktionseinheit sind, als einander inhaltlich nicht nahe klassifiziert werden.

Für die grafische Darstellung wird im Rechnerbaustein für ein vorgegebenes Prozeßsignal die inhaltliche Nähe dieses Prozeßsignals zu anderen Prozeßsignalen in eine räumliche Nähe der die Prozeßsignale repräsentierenden Informationselemente transformiert. Das vorgegebene Prozeßsignal kann dabei beispielsweise eine Störungsmeldung sein. Durch die grafische Darstellung werden somit andere Prozeßsignale, die mit dem ausgewählten Prozeßsignal besonders stark korreliert sind, nahe zu diesem positioniert dargestellt, so daß für das Bedienpersonal besonders leicht erkennbar ist, welche Meßdaten oder Meßgrößen in Zusammenhang mit der Störmeldung generiert wurden. Auf diese Weise ist eine Signalrückverfolgung und somit eine Fehlerdiagnose besonders zuverlässig und effektiv möglich.

Für eine Diagnose des Anlagenzustands wird zweckmäßigerweise ein on-line erfaßtes Prozeßsignal vorgegeben. Zum Zwecke einer Rückverfolgung kann auch ein archiviertes on-line erfaßtes Prozeßsignal vorgegeben werden. Durch die somit mögliche schnelle Ermittlung der zu diesem on-line erfaßten Prozeßsignal korrelierten Prozeßsignale ist eine Ursachenerkennung für eine Fehlermeldung besonders effektiv durchführbar.

Für eine Prognose eines Anlagenzustandes wird zweckmäßigerweise aus einem mit dem Rechnerbaustein verbundenen Simulatorbaustein ein simuliertes Prozeßsignal vorgegeben. Dadurch ist es möglich, die in der Art einer logischen Verkettung durch ein Prozeßsignal generierten weiteren Prozeßsignale zu verfolgen. Somit ist das Verhalten der Kraftwerksanlage besonders gut abschätzbar, planbar oder voraussehbar.

Um die Signalrückverfolgung besonders wirkungsvoll zu unterstützen, wird zweckmäßigerweise die zeitliche und/oder die logische Abfolge von Prozeßsignalen dargestellt. Dabei wird bei der Darstellung differenziert, ob ein erstes Prozeßsignal einem zweiten Prozeßsignal zeitlich und/oder logisch vorausgeht oder nachfolgt. Auf diese Weise ist eine Entwicklung des Anlagenzustands besonders leicht interpretierbar. Die Abfolge von Prozeßsignalen kann dabei beispielsweise durch einen Pfeil zwischen jeweils zwei Prozeßsignalen zugeordneten Informationselementen repräsentiert werden, wobei die Pfeilspitze in Richtung des das zeitlich bzw. logisch spätere Prozeßsignal repräsentierende Informationselementes weist.

Die generierte grafische Darstellung kann lediglich eine Ordnung von Prozeßsignale repräsentierenden Informationselementen sein. Vorzugsweise werden jedoch Informationselemente sowohl von Prozeßsignalen als auch von Funktionseinheiten anhand ihrer Korrelationen untereinander dargestellt. Zweckmaßigerweise werden zusätzlich Prozeßsignale miteinander verknüpfende Operatoren als Informationselemente dargestellt.

Der Informationsraum, in dem die Informationselemente dargestellt werden, ist n-dimensional, vorzugsweise dreidimensional. Daher werden zur Festlegung der Position jedes Informationselementes in diesem Informationsraum vorzugsweise drei räumliche Koordinaten ermittelt. Auf einem geeigneten Anzeigegerät in der Leitwarte, z.B. auf einem Bildschirm, wird daher vorteilhafterweise eine 3D-Darstellung gewählt.

Ein Ausführungsbeispiel der Erfindung wird anhand einer Zeichnung näher erläutert. Darin zeigen:
- Figur 1: Ein Funktionsschema mit zur Durchführung eines Analyseverfahrens für eine Kraftwerksanlage vorgesehenen Komponenten, und
- Figur 2: eine für einen Betriebszustand der Kraftwerksanlage charakteristische Anordnung von Prozeßsignale oder Funktionseinheiten repräsentierenden Informationselementen.

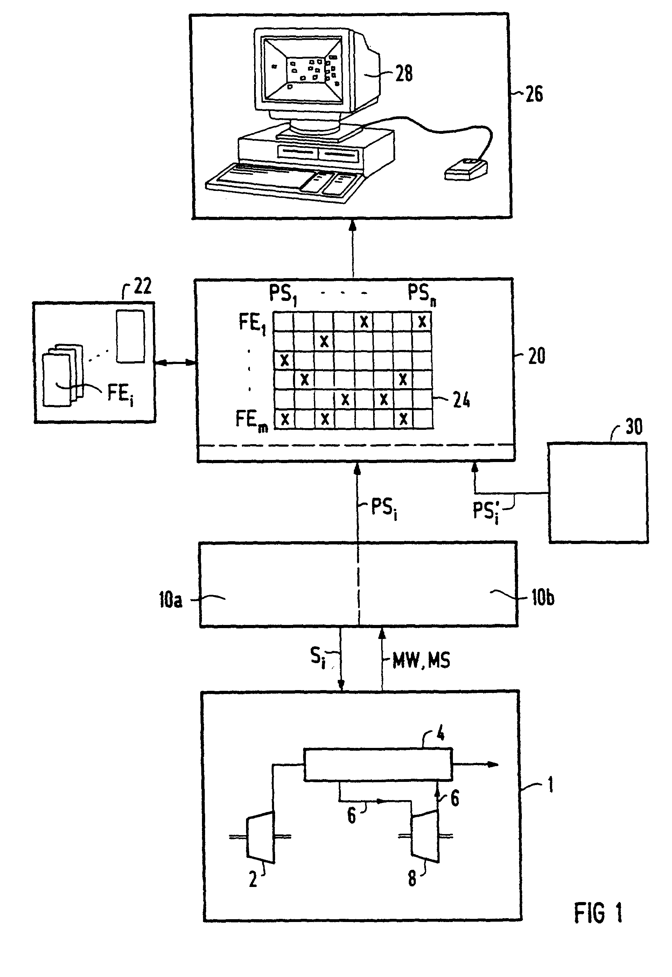

Als Kraftwerksanlage ist in Figur 1 schematisch eine Gas- und Dampfturbinenanlage 1 dargestellt. Diese umfaßt eine Gasturbine 2 und einen dieser rauchgasseitig nachgeschalteten Abhitzedampferzeuger 4, dessen Heizflächen in den Wasser-Dampf-Kreislauf 6 einer Dampfturbine 8 geschaltet sind.

Von (nicht dargestellten) Sensoren erfaßte Meßwerte MW sowie von (nicht dargestellten) Meldeelementen abgegebene Meldesignale MS werden einem Automatisierungssystem 10a und einem leittechnischen Informationssystem 10b zugeführt.

In Automatisierungseinheiten des Automatisierungs- und Informationssystems 10a, 10b der Gas- und Dampfturbinenanlage 1 werden die Meßwerte MW und die Meldesignale MS vorverarbeitet. Gegebenenfalls werden Steuersignale Sᵢ an Komponenten der Gas- und Dampfturbinenanlage 1 abgegeben. Die zusammenlaufenden Informationen über Messungs-, Regelungs- und Steuerungsereignisse sowie über die Signalerzeugung werden im Informationssystem 10b hinterlegt. Durch die innerhalb des Automatisierungs- und Informationssystems 10a, 10b ablaufenden Prozesse wird die Gas- und Dampfturbinenanlage 1 automatisch gesteuert und überwacht. Von dem Automatisierungs- und Informationssystem 10a, 10b werden anhand der on-line erfaßten Meßwerte MW und Meldesignale MS sowie der Steuersignale Sᵢ für den Anlagenprozeß relevante Prozeßsignale PSᵢ generiert. Diese werden an einen an das Automatisierungs- und Informationssystem 10a, 10b angeschlossenen Rechnerbaustein 20 übergeben.

Seiner Struktur nach ist der Anlagenprozeß der Gas- und Dampfturbinenanlage 1 in Funktionseinheiten FEᵢ gegliedert. Jede Funktionseinheit FEᵢ ist in der Art eines Flußdiagramms als Funktionsplan in einem mit dem Rechnerbaustein 20 verbundenen Speicherbaustein 22 hinterlegt.

Jede Funktionseinheit FEᵢ umfaßt dabei - in der Art einer Subroutine eines Computerprogramms - eine Anzahl von zur Ausführung einer Operation notwendigen technischen Verfahrensschritten. So umfaßt beispielsweise die Funktionseinheit "Notabschaltung der Pumpe" die Verfahrensschritte "Energiezufuhr der Pumpe abschalten", "Zu- und Ableitungen der Pumpe absperren" und "Reservepumpe aktivieren". Der Funktionseinheit FEᵢ wird dazu eine Anzahl der Prozeßsignale PSᵢ zugeführt. Diese Prozeßsignale PSᵢ werden in der Funktionseinheit FEᵢ bearbeitet und dabei modifiziert oder in andere Prozeßsignale PSᵢ umgewandelt. In der Funktionseinheit FEᵢ generierte Prozeßsignale PSᵢ werden von der Funktionseinheit FEᵢ als Ausgangsgrößen ausgegeben. Somit ist jedes Prozeßsignal PSᵢ Bestandteil einer Anzahl von Funktionseinheiten FEᵢ. Mit anderen Worten: Jedes Prozeßsignal PSᵢ ist Eingangsgröße für oder Ausgangsgröße von einer Anzahl von Funktionseinheiten FEᵢ. Ein Prozeßsignal PSᵢ kann dabei auch unverändert durch die Funktionseinheit FEᵢ weitergegeben werden.

Auf Abruf werden die Funktionseinheiten FEᵢ dem Rechnerbaustein 20 zugeführt. Innerhalb des Rechnerbausteins 20 wird für jedes Prozeßsignal PSᵢ und für jede Funktionseinheit FEᵢ geprüft, ob dieses Prozeßsignal PSᵢ Bestandteil dieser Funktionseinheit FEᵢ ist. Dazu wird ein Kontext generiert, in dem in Form einer Matrix 24 eine eindeutige Zuordnung von Funktionseinheiten FEᵢ zu Prozeßsignalen PSᵢ durchgeführt wird. Diese Zuordnung ist im Sinne der formalen Begriffsanalyse als Zuweisung von Merkmalen zu Gegenständen zu verstehen.

Nach Vorgabe eines bestimmten Prozeßsignals PSᵢ werden anhand von im Kontext vorhandenen Informationen allen Prozeßsignalen PSᵢ vom Rechnerbaustein 20 räumliche Koordinaten zugeordnet. Dabei wird nach dem Prinzip "kontextuelle Nähe entspricht räumlicher Nähe" der Grad der Korrelation zwischen jeweils zwei Prozeßsignalen PSᵢ bestimmt. Dazu wird das Verhältnis der Anzahl derjenigen Funktionseinheiten FEᵢ, in denen beide Prozeßsignale PSᵢ gemeinsam Bestandteil sind, zur Anzahl der Funktionseinheiten FEᵢ, in denen mindestens eines der beiden Prozeßsignale PSᵢ Bestandteil ist, ermittelt. Aus diesem Verhältnis ergibt sich dann ein quantitatives Maß für den Grad der Korrelation zwischen diesen beiden Prozeßsignalen PSᵢ. Sind zum Beispiel beide Prozeßsignale PSᵢ ausschließlich Bestandteil derselben Funktionseinheiten FEᵢ, so sind die beiden Prozeßsignale PSᵢ hochgradig korreliert. Demgegenüber sind zwei Prozeßsignale PSᵢ nicht miteinander korreliert, wenn sie in keiner Funktionseinheit FEᵢ gemeinsamer Bestandteil sind. Dieses quantitative Maß der Korrelation zwischen zwei Prozeßsignalen PSᵢ wird in einen entsprechenden Abstand ihrer räumlichen Koordinaten zueinander transformiert.

Auf der Grundlage dieser räumlichen Zuordnung wird eine grafische Darstellung für die Prozeßsignale PSᵢ in einem Grafikmodul 26 erzeugt. Von dem Grafikmodul 26 werden zunächst Informationselemente Iᵢ(PSᵢ) für die mit dem vorgesehenen Prozeßsignal PSᵢ korrelierten Prozeßsignal PSᵢ generiert und anhand der räumlichen Koordinaten auf einer Anzeige 28 positioniert. Dabei ist für das Bedienpersonal bereits aus dem Abstand des Informationselements Iᵢ(PSᵢ) eines Prozeßsignals PSᵢ zu dem Informationselement Iᵢ(PSᵢ) des vorgegebenen Prozeßsignals (PSᵢ) erkennbar, inwieweit ein Prozeßsignal PSᵢ mit dem vorgegebenen Prozeßsignal PSᵢ korreliert ist. Dadurch wird deutlich gemacht, welche Bedeutung jedes Prozeßsignal PSᵢ für das vorgegebene Prozeßsignal PSᵢ hat. Wird z.B. als vorgegebenes Prozeßsignal PSᵢ eine Störungsmeldung gewählt, so ist für das Bedienpersonal leicht ersichtlich, welche Prozeßsignale PSᵢ für diese Störungsmeldung relevant sind. Somit ist eine Signalrückverfolgung zur Diagnose, insbesondere eine Analyse der Ursachen für die Störung, deutlich erleichtert.

Alternativ kann dem Rechnerbaustein 20 auch ein simuliertes Prozeßsignal PSᵢ' vorgegeben werden, das in einem mit dem Rechnerbaustein 20 verbundenen Simulatorbaustein 30 generiert wurde. In diesem Fall werden auf der Anzeige 28 die Informationselemente Iᵢ(PSᵢ) von denjenigen Prozeßsignalen PSᵢ dargestellt, die mit dem simulierten vorgegebenen Prozeßsignal PSᵢ' korreliert sind. Somit ist es für das Bedienpersonal in der Art einer Prognose möglich, vorherzusagen, welches Prozeßsignal PSᵢ' zur Generierung welcher Prozeßsignale PSᵢ beitragen wird.

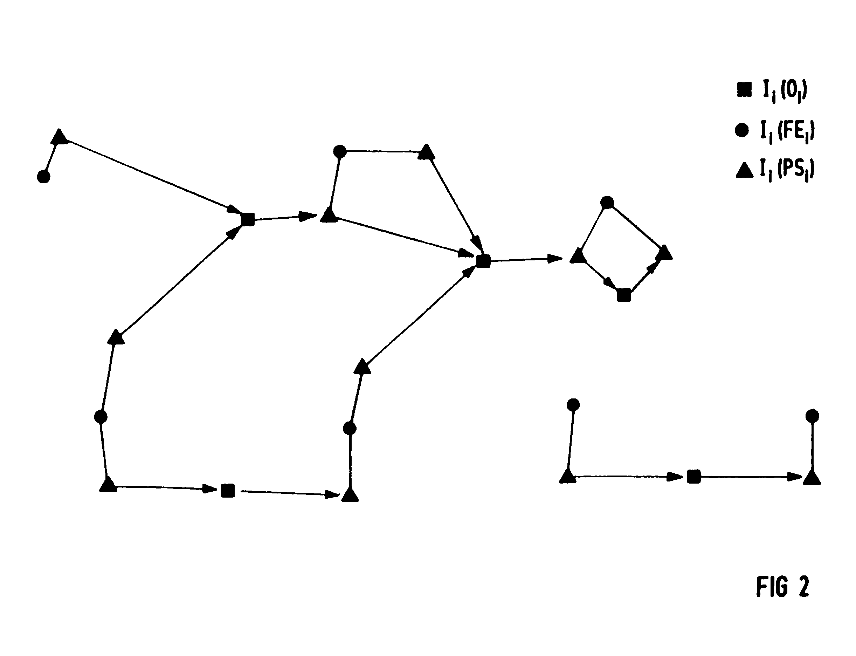

Auch können die den Prozeßsignalen PSᵢ zugeordneten Informationselemente Iᵢ(PSᵢ) gemeinsam mit Funktionseinheiten FEᵢ und/oder Prozeßsignale PSᵢ miteinander verknüpfenden Operatoren Oᵢ zugeordneten Informationselementen Iᵢ (FEᵢ) bzw. Iᵢ (Oᵢ) gemeinsam dargestellt sein. Dies zeigt Figur 2 in einer grafischen Darstellung eines Meßdatenprotokolls. Die zeitliche und/oder logische Abfolge von Prozeßsignalen PSᵢ ist dabei für jeweils zwei Prozeßsignale PSᵢ durch einen Pfeil zwischen den diesen zugeordneten Informationselementen Iᵢ (PSᵢ) dargestellt. Die Spitze des Pfeils weist in Richtung des dem zeitlich und/oder logisch späteren Prozeßsignal PSᵢ jeweils zugeordneten Informationselements Iᵢ(PSᵢ). Dadurch ist die der Meldefolge zugrundeliegende Verkettung der Prozeßsignale PSᵢ dargestellt.

## Patentansprüche

1. Analysesystem für eine technische Anlage, insbesondere für eine Kraftwerksanlage, deren Anlagenprozeß in Funktionseinheiten (FEᵢ) zur Verarbeitung von Prozeßsignalen (PSᵢ) gegliedert ist,
**dadurch gekennzeichnet**, daß für ein vorgebbares Prozeßsignal (PSᵢ) die mit diesem korrelierten Prozeßsignale (PSᵢ) als Informationselemente (Iᵢ(PSᵢ)) auf einer Anzeigeeinrichtung (28) derart positioniert darstellbar sind, daß der Abstand zwischen jeweils zwei Informationselementen (Iᵢ(PSᵢ)) den Grad ihrer kontextuellen Nähe repräsentiert.

2. Analysesystem nach Anspruch 1,
**dadurch gekennzeichnet**, daß die Funktionseinheiten (FEᵢ) in Funktionsplänen zusammengefaßt und in einem mit einem Rechnerbaustein (20) verbundenen Speicherbaustein (22) hinterlegt sind.

3. Analysesystem nach Anspruch 1 oder 2,
**dadurch gekennzeichnet**, daß für eine Diagnose ein aus on-line erfaßten Meßwerten (MW) oder Meldesignalen (MS) generiertes Prozeßsignal (PSᵢ) vorgebbar ist.

4. Analysesystem nach Anspruch 1 oder 2,
**dadurch gekennzeichnet**, daß für eine Prognose ein in einem mit dem Rechnerbaustein (20) verbundenen Simulatorbaustein (30) hinterlegtes Prozeßsignal (PSᵢ') vorgebbar ist.

5. Analysesystem nach einem der Ansprüche 1 bis 4,
**dadurch gekennzeichnet**, daß die zeitliche und/oder logische Abfolge von Prozeßsignalen (PSᵢ) auf der Anzeigeeinrichtung (28) darstellbar ist.

## Claims

1. Analysis system for a technical plant, in particular for a power generating plant, the plant process of which is divided into functional units (FEᵢ) for processing process signals (PSᵢ), characterized in that the process signals (PSᵢ) which are correlated with a prescribable process signal (PSᵢ) being represented of the said prescribable process signal (PSᵢ) as information elements (Iᵢ(PSᵢ)) on a display device (28), positioned in such a way that the distance between in each case two information elements (Iᵢ(PSᵢ)) represents the degree of their contextual proximity.

2. Analysis system according to Claim 1, characterized in that the functional units (FEᵢ) are collected in control system flowcharts and stored in a memory module (22) connected to a computer module (20).

3. Analysis system according to Claim 1 or 2, characterized in that a process signal (PSᵢ) which is generated from measured values (MW) or status signals (MS) which are acquired online can be prescribed for a diagnosis.

4. Analysis system according to Claim 1 or 2, characterized in that a process signal (PSᵢ') which is stored in a simulator module (30) which is connected to the computer module (20) can be prescribed for a prognosis.

5. Analysis system according to one of Claims 1 to 4, characterized in that the chronological and/or logic sequence of process signals (PSᵢ) can be represented on the display device (28).

## Revendications

1. Système d'analyse pour une installation industrielle, notamment pour une centrale électrique, dont le processus de gestion de l'installation est divisé en unités de fonction (FEᵢ) pour le traitement de signaux de processus (PSᵢ),
**caractérisé** en ce que pour un signal de processus (PSᵢ) pouvant être prescrit, les signaux de processus (PSᵢ) qui sont en corrélation avec celui-ci, peuvent être représentés sur un dispositif de visualisation (28), en tant qu'éléments d'information (Iᵢ(PSᵢ)), en étant positionnés de manière telle, que la distance entre deux éléments d'information (Iᵢ(PSᵢ)) représente le degré de leur proximité contextuelle.

2. Système d'analyse selon la revendication 1, **caractérisé** en ce que les unités de fonction (FEᵢ) sont regroupées en plans de fonction et sont consignées dans un composant de mémoire (22) relié à un composant de calculateur (20).

3. Système d'analyse selon la revendication 1 ou 2, **caractérisé** en ce que pour un diagnostic, un signal de processus (PSᵢ) généré à partir de valeurs de mesure (MW) relevées en ligne ou de signaux de message (MS), peut être prescrit.

4. Système d'analyse selon la revendication 1 ou 2, **caractérisé** en ce que pour une prévision, un signal de processus (PSᵢ') consigné dans un composant de simulateur (30) relié au composant de calculateur (20), peut être prescrit.

5. Système d'analyse selon l'une des revendications 1 à 4, **caractérisé** en ce que la suite dans le temps et/ou la suite logique de signaux de processus (PSᵢ) peut être représentée sur le dispositif de visualisation (28).
